# EUROPÄISCHE PATENTSCHRIFT

(11) **EP 3 181 278 B1**
(45) Veröffentlichungstag und Bekanntmachung des Hinweises auf die Patenterteilung: **06.07.2022**
(21) Anmeldenummer: 16002173.9
(22) Anmeldetag: 07.10.2016
(51) Int. Cl.: B23B 51/10

(54) **ENTGRATWERKZEUG UND VERFAHREN ZUM ENTGRATEN BOHRUNGSRÄNDERN**
DEBURRING TOOL AND METHOD FOR DEBURRING EDGES OF HOLES
OUTIL D'ÉBAVURAGE ET PROCÉDÉ POUR ÉBAVURER LES BORDS DE TROUS

(30) Priorität: 16.12.2015 DE 102015016277
(43) Veröffentlichungstag der Anmeldung: 21.06.2017
(73) Patentinhaber: Heule Werkzeug AG, 9436 Balgach (CH)
(72) Erfinder: Studer, Harry, 9436 Balgach (CH); Fässler, Roman, 9437 Marbach (CH)
(74) Vertreter: Riebling, Peter

(56) Entgegenhaltungen:
- EP-B1- 0 446 767
- WO-A1-2013/044589
- US-A- 2 895 356

## Beschreibung

Die Erfindung betrifft ein Verfahren zum Entgraten von sich schneidenden Bohrungsrändern und ein hierzu geeignetes Werkzeug nach den Oberbegriffen der Patentansprüche 1 und 10.

Mit der US 2 895 356 A wird ein Entgratwerkzeug mit einem Entgratmesser und ein Verfahren nach den Oberbegriffen der Patentansprüche 1 und 10 offenbart. Der Grundkörper des Entgratwerkzeuges weist ein Messerfenster auf, innerhalb welchem federbelastet und schwenkbar um einen Drehpunkt ein Messerhalter mit einem Entgratmesser angeordnet ist.

Mit den auf den gleichen Anmelder zurückgehenden EP 0446 767 B1 und EP 2 671 656 A1 ist ein Entgratwerkzeug zum Entgraten von Bohrungsrändern ebener und unebener Form mit einem um seine Längsachse drehbar angetriebenen Grundkörper bekannt geworden, in dem mindestens ein stabförmiges Entgratmesser in einem schwenkbar im Grundkörper gelagert Messerhalter befestigt ist.

Das Entgratwerkzeug besteht aus einem um seine Längsachse drehbar angetriebenen Grundkörper, in dem mindestens der eine Messerhalter mit mindestens einem dort befestigten Entgratmesser in vertikaler Richtung schwenkbar auf einer grundkörperseitigen Messerlagerung gelagert ist. Der Messerhalter ist als annähernd zylindrischer oder scheibenförmiger Körper ausgebildet, der drehbar in einer Lagerbohrung des Grundkörpers gehalten ist.

Das Entgratwerkzeug besteht aus einem um seine Längsachse drehbar angetriebenen Grundkörper, in dem mindestens der eine Messerhalter mit mindestens einem dort befestigten Entgratmesser in vertikaler Richtung schwenkbar auf einer grundkörperseitigen Messerlagerung gelagert ist. Der Messerhalter ist als annähernd zylindrischer oder scheibenförmiger Körper ausgebildet, der drehbar in einer Lagerbohrung des Grundkörpers gehalten ist.

Am Außenumfang des Messerhalters ist eine in radialer Richtung gerichtete und nach außen offene Steuernut angeordnet ist, in welche das freie biegbare Ende einer Biegefeder eingreift, deren anderes Ende am Grundkörper eingespannt ist.

Ein solches Entgratwerkzeug zum Entgraten von Bohrungsrändern ebener oder unebener Form hat sich in großem Umfang bewährt.

In der Ruhestellung des Entgratwerkzeuges ist das Entgratmesser im Winkel von 90° zur Längsachse des Grundkörpers federbelastet ausgeschwenkt.

In der Arbeitsstellung wird das Messer aus seiner um 90° ausgeschwenkten Ruhestellung federbelastet durch die Biegekraft der Biegefeder um Winkelbereiche von z. B. 30° aus dieser 90° heraus geschwenkten Stellung nach unten oder oben verschwenkt, um federbelastet am unebenen Bohrungsrand anzuliegen und dort eine spanabhebende Entgratung durchzuführen.

Probleme beim Entgraten von unebenen Bohrungsrändern ergeben sich aber dann, wenn es um die Entgratung von zwei sich im Winkel ihrer Längsachsen schneidenden Bohrungen geht.

Es gibt einen ersten schwierigen Entgratungsfall, der beispielhaft darin besteht, dass in einem rohrförmigen Werkstück eine Querbohrung angeordnet ist, die den Mantel des rohrförmigen Werkstückes (schräg oder gerade) durchsetzt und so eine asymmetrische Mantelkontur in der Wandung des rohrförmigen Werkstücks ausbildet, die erfindungsgemäß entgratet werden soll.

Die Erfindung definiert diese asymmetrische Mantelkontur als Störkontur, weil die Entgratung einer die Längsbohrung durchsetzenden Querbohrung auf besondere Schwierigkeiten stößt und die später definierte Störkontur bedeutet, dass das Entgratmesser an bestimmten Teilen dieser Störkontur aufläuft und der Bruch des Entgratmessers droht.

Bei der Entgratung von Störkonturen aufweisenden Bohrungen ergibt sich das Problem, dass das Entgratmesser mit seiner kugelförmig ausgebildeten Spitze tangential auf die Störkontur aufläuft und nicht ausweichen kann.

Die Messerachse des Entgratmessers steht somit im Bruchfall senkrecht auf einer Tangente, die an den Bohrungsinnenumfang angelegt ist.

Dieser Fall entsteht dann, wenn die Messerlängsachse genau senkrecht zur Ebene des Bohrungsinnenumfangs steht und daher kein auslenkendes Drehmoment mehr auf das Entgratmesser wirkt, so dass dieses passiv in der um 90 Grad ausgeschwenkten Stellung verharrt und nicht ausweicht, weil keine - positiven oder negativen - auslenkenden Ausweichdrehmomente auf das Entgratmesser wirken. Dadurch gelangt eine Bruchlast auf das Entgratmesser, das bricht, weil eine aus der 90-Grad-Schwenklage heraus schwenkende Ausweichmöglichkeit nicht gegeben ist.

Der Fall der Gefahr des Messerbruchs des Entgratmessers kann sowohl bei der Innenentgratung von Bohrungsverschneidungen als auch bei der Außenentgratung von Bohrungsverschneidungen sich kreuzender Bohrungen auftreten.

Ein anderer Störfall ist, wenn eine zu entgratende Querbohrung so nahe an einem vorstehenden Bohrflansch anliegt, dass auch die das Hauptrohr schneidende und zu entgratende Querbohrung an den vorstehenden Rohrflansch gegenüberliegend mit geringem Abstand gegenüber gestellt ist und das Entgratmesser beim Entgraten der Querbohrung auf den vorstehenden Rohrflansch aufläuft und ebenfalls nicht ausweichen kann.

Der Erfindung liegt deshalb die Aufgabe zugrunde, ein Verfahren und ein hierzu geeignetes Entgratmesser der eingangs genannten Art so weiterzubilden, dass auch Störkonturen aufweisende Querbohrungen in einem Querstück einfach und betriebssicher ohne Gefahr des Bruchs des Entgratmessers entgratet werden können.

Zur Lösung der gestellten Aufgabe ist die Erfindung durch die technische Lehre des Anspruches 1 und des Anspruches 10 gekennzeichnet.

Merkmal der Erfindung ist, dass die Ruhelage des Entgratmessers nicht mehr die um 90° aus dem Grundkörper des Entgratwerkzeuges ausgeschwenkte Stellung ist, sondern dass das Entgratmesser mit seiner Messerachse eine zur neutralen Stellung abgewinkelte Schwenkstellung einnimmt und dass dem Entgratmesser eine Rücklaufsperre zugeordnet ist, welche ein Zurückschwenken in die 90 Grad Stellung verhindert.

Der vorherige Neutralwinkel von 90°, der zwischen der Messerlängsachse (=Messerachse) des Entgratmessers und der Längsachse des Entgratwerkzeuges vorhanden war, wird nun beim Betrieb des Entgratwerkzeuges in Rückwärtsentgratungsrichtung vermindert, vorzugsweise um einen negativen Zusatzwinkel, der im Bereich zwischen 0 bis 80° liegt, während im Fall der Vorwärtsentgratung der Zusatzwinkel vorzugsweise 0 bis 80° ist, aber in der positiven Richtung.

Als Beispiel wird angegeben, dass bei einer Rückwärtsentgratung das Entgratwerkzeug in vertikaler Richtung nach oben relativ zum Werkstück bewegt wird. In diesem Fall ist die Messerachse des Entgratmessers schräg nach unten (entgegen der Vorschubrichtung) gerichtet. Der die Schrägstellung der Messerachse beschreibende Zusatzwinkel wird deshalb als "negativ" bezeichnet.

Durch die Schrägstellung des Entgratmessers während der gegebenen Verfahrensabläufe in Verbindung mit einer Rücklaufsperre wird stets sichergestellt, dass das Entgratmesser nicht in eine unerwünschte neutrale Totposition gelangen kann, wo keine Auslenkkräfte mehr auf das Entgratmesser wirken, die dazu führen würden, dass das Entgratmesser auf die Störkontur der Querbohrung aufläuft und dort abbricht.

Mit der beabsichtigten, voreingestellten Schrägstellung des Entgratmessers, d.h. eine Winkelstellung der Längsachse des Entgratmessers zur Längsachse des Entgratwerkzeuges wird stets dafür gesorgt, dass das Entgratmesser entweder in der einen oder in der anderen Richtung ausgelenkt werden kann und keine schädlichen Querkräfte auf das Entgratmesser wirken, die das Entgratmesser in einer unerwünschten neutralen Position halten, die zu einem Bruch des Entgratmessers führen. Dazu wird eine Rücklaufsperre verwendet, die ein Verschwenken des Entgratmessers in die 90 Grad Stellung verhindert. Die Erfindung ist nicht auf die Entgratung von Bohrungsrändern von Querbohrungen beschränkt, die in ebenfalls Längsbohrungen aufweisenden Werkstücken angeordnet sind.

Die Erfindung betrifft allgemein die Entgratung unrunder Bohrungskonturen, wobei der Begriff Störungskontur dahingehend definiert wird, dass eine Störkontur immer dann besteht, wenn die Gefahr besteht, dass das Entgratmesser in seiner um 90° aus dem Entgratwerkzeug herausragenden Lage auf eine Bohrungskontur aufläuft und - physikalisch bedingt - weder eine Vorwärts- noch eine Rückwärtsbewegung machen kann, die demzufolge in diesem Fall zu einem Bruch des Entgratmessers führt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im Folgenden wird die Erfindung anhand von mehreren Ausführungswegen darstellenden Zeichnungen näher erläutert. Hierbei gehen aus den Zeichnungen und ihrer Beschreibung weitere Vorteile der Erfindung hervor.

Es zeigen:
- Figur 1:: schematisiert die Entgratung einer Querbohrung in einem rohrförmigen Werkstück mit Angabe der Störkontur in bestimmten Winkelsegmenten
- Figur 1a:: die Ansicht in Pfeilrichtung la in Figur 1 in Längsrichtung des Entgratwerkzeuges
- Figur 1b:: die Ansicht in Pfeilrichtung Ib nach Figur 1 in die Hauptbohrung des Werkstückes hinein, wobei der Störungsfall gezeigt ist, bei dem das Messer brechen würde und der vermieden werden soll
- Figur 1c:: die gleiche Darstellung wie Figur 1b mit der erfindungsgemäßen Auslenkung des Entgratmessers zur Vermeidung des Bruchs des Messers nach Figur 1b
- Figur 1d:: eine vergrößerte Darstellung des Endes der Biegefeder nach Figur 1c mit Darstellung der Steuerkurve
- Figur 2:: die Darstellung eines Entgratvorganges bei Außenentgratung einer Querbohrung, wobei die Außenentgratung durch einen vorstehenden Flanschring an einem rohrförmigen Werkstück behindert wird
- Figur 2a:: die Ansicht in Richtung der Längsachse des Entgratwerkzeuges ähnlich der Darstellung in Figur 1a
- Figur 2b:: die Seitenansicht auf die Querbohrung in einem aus Vollmaterial bestehenden Werkstück
- Figur 2c:: das Einfahren des Entgratwerkzeuges in die Querbohrung in ausgelenkter und den Bruch vermeidenden Stellung des Entgratmessers
- Figur 3:: die Seitenansicht eines erfindungsgemäßen Entgratwerkzeuges mit einem Entgratmesser, welches in einer von 90° abweichenden Winkelstellung federbelastet arretiert ist
- Figur 4:: eine erste Ausführungsform für die federbelastete Arretierung des Entgratmessers in einer von 90° abweichenden Winkelstellung
- Figur 5:: ein erster Verfahrensschritt beim Einfahren des Entgratwerkzeuges in eine Querbohrung
- Figur 6:: der zweite Verfahrensschritt beim Einfahren des Entgratwerkzeuges in die Querbohrung
- Figur 7:: der dritte Verfahrensschritt beim Einfahren des Entgratwerkzeuges in die Querbohrung mit nachfolgender Entgratung
- Figur 8:: eine zweite Ausführungsform eines Entgratwerkzeuges mit einer federbelasteten Arretierung des Entgratmessers, abweichend von einer 90° neutralen Lage
- Figur 9:: eine dritte Ausführungsform mit Darstellung einer abgewandelten Ausführung des Entgratmessers
- Figur 10:: eine weitere Ausgestaltung der Erfindung
- Figur 11:: eine gegenüber Figur 10 abgewandelte Ausführungsform

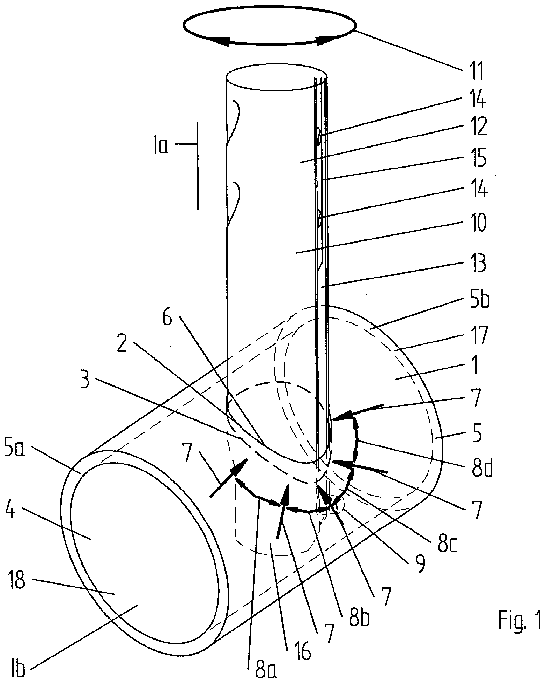

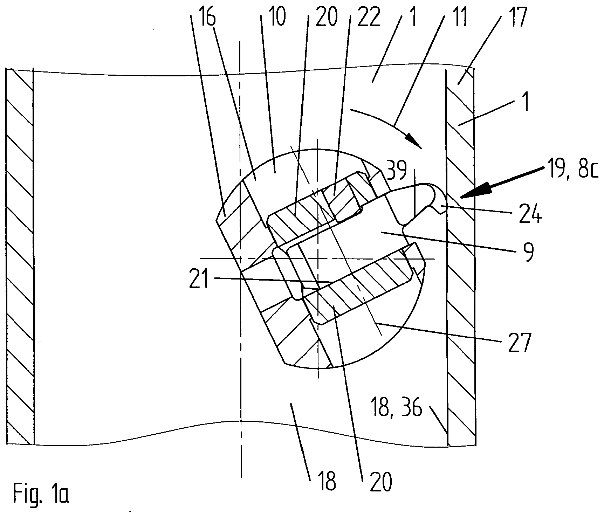

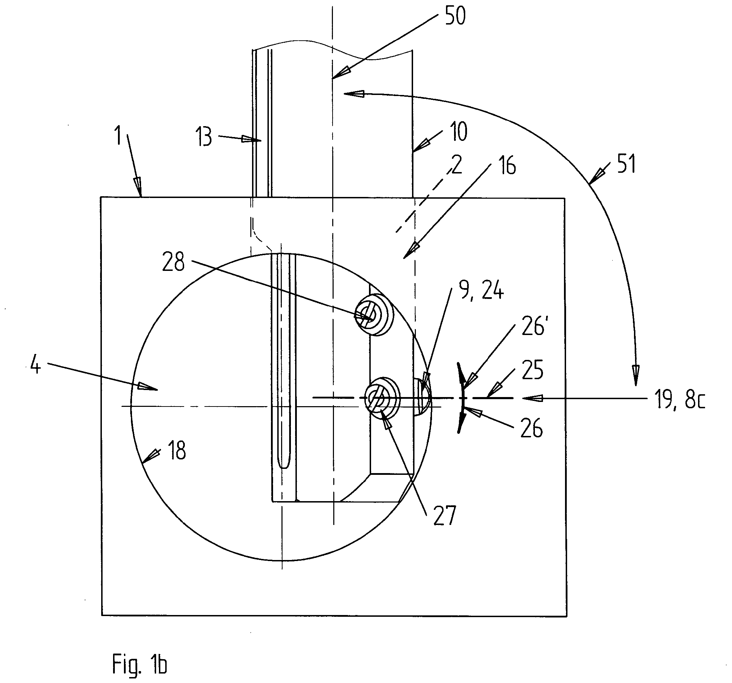

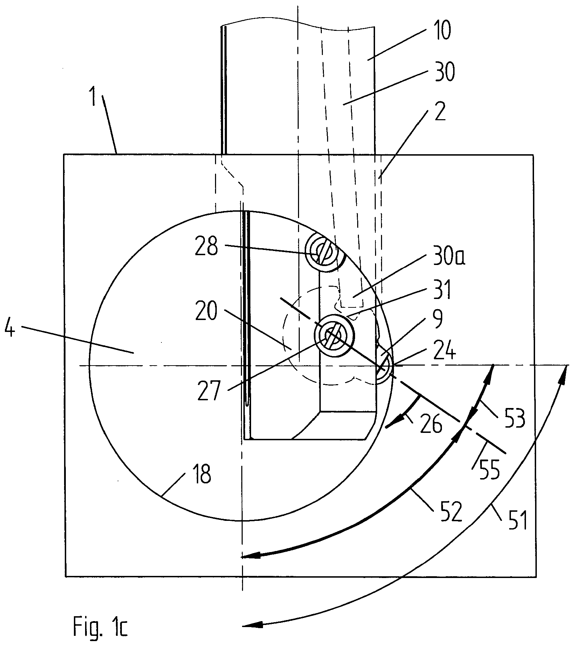

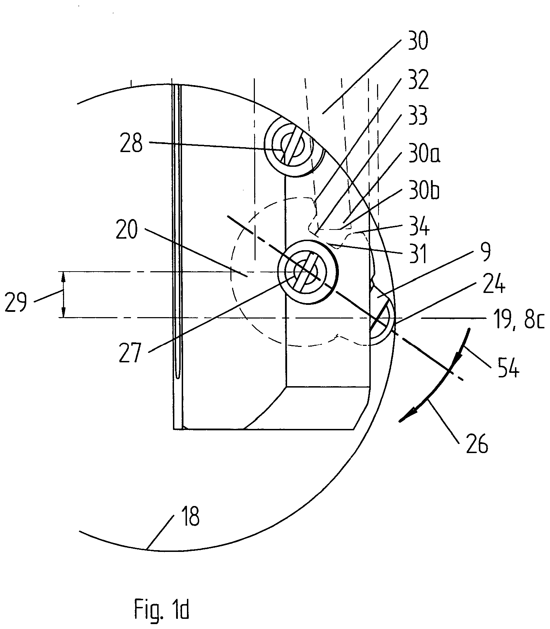

Die Figur 1 zeigt einen ersten Anwendungsfall der Erfindung, bei dem in einem rohrförmigen Werkstück 1 eine Querbohrung 2 angeordnet ist und der Innenrand 3 dieser Querbohrung 2 mit dem erfindungsgemäßen Entgratwerkzeug 10 entgratet werden soll, wobei von der Längsachse 50 des Entgratwerkzeuges 10 ein schräg nach außen gestelltes Entgratmesser 9 für die Entgratung des Innenrandes 3 dient.

Das rohrförmige Werkstück hat eine Hauptbohrung 4, die von der Querbohrung 2 geschnitten wird, wobei sich ein zu entgratender Innenrand 3 und ein Außenrand 6 ergeben.

In an sich bekannter Weise hat das rohrförmige Werkstück 1 zwei gegenüberliegende Stirnflächen 5a, 5b und das Entgratmesser 9 soll nun zur Innenentgratung des innen liegenden Innenrandes 3 genutzt werden, der mit dem Rohrinnenmantel 18 zusammen fällt. Der die unrunde zu entgratende und Störkonturen aufweisende Innenrand 3 soll demnach mit dem erfindungsgemäßen Entgratmesser 9 entgratet werden.

Der besseren Verständlichkeit halber ist dargestellt, dass bei den Pfeilrichtungen 7, die lediglich Positionen der Drehstellung des Entgratwerkzeuges 10 darstellen, verschiedene Segmente 8a, 8b, 8c und 8d gebildet werden, wobei es sich lediglich um sektorförmige Bereiche handelt, die sich entlang dem zu entgratenden Innenrand 3 ergeben, wobei im Bereich dieser Segmente das Segment 8c den kritischen Bereich darstellt, dort nämlich, wo das Entgratmesser 9 in einer neutralen Lage aufläuft und zum Bruch führen kann.

Das kritische Segment 8c, bei dem das Entgratmesser 9 in eine unerwünschte, bruchgefährdete Lage gelangt, gilt nur für den Fall, dass das Entgratwerkzeug 10 im Uhrzeigersinn angetrieben wird, wird hingegen das Entgratwerkzeug im Uhrzeigergegensinn angetrieben, würde sich ein anderes Segment, nämlich das Segment 8b als kritisches Segment herausstellen, welches am Umfang des Innenrandes 3 eine bruchgefährdende Kontur für das Entgratmesser 9 ausbildet.

Das Entgratwerkzeug 10 besteht im Wesentlichen aus einem etwa zylinderförmigen Grundkörper 12, an dessen einen Seite eine Längsnut 13 angeordnet ist, in der eine Klemmleiste 15 mit Hilfe von Schrauben 14 befestigt ist, die eine noch später zu beschreibende Biegefeder 30 einseitig festklemmt.

Das andere Ende der Biegefeder 30 wirkt auf einen Messerhalter 20, in dem das Entgratmesser 9 eingespannt ist.

Wichtig für das nachfolgend beschriebene Verfahren ist auch, dass der Grundkörper 12 an seinem unteren Ende eine den Durchmesser des Grundkörpers vermindernde Freistellung 43 aufweist, so dass der Grundkörper in ein den Durchmesser verminderndes Grundkörperteil 16 übergeht. Der im Durchmesser verminderte Grundkörperteil 16 ist der Teil, in dem der Messerhalter 20 mit dem dort befestigten Entgratmesser 9 angeordnet ist. Das Entgratmesser 9 kann dabei fest im Messerhalter 20, aber auch auswechselbar (siehe EP 2 671 656 A1) angeordnet sein.

Es ergibt sich definitionsgemäß eine Störkontur 36, weil der Innenrand 3 der Querbohrung 2 nahe am Rohrinnenmantel 18 liegt.

Die Rohrwandung 17 des rohrförmigen Werkstücks 8 ist dabei durch den Rohrinnenmantel 18 definiert.

Die Figur 1a zeigt die Ansicht in Längsrichtung des Entgratwerkzeuges 10 als Schnitt durch den unteren Grundkörperteil 16, wo erkennbar ist, dass ein Messerhalter 20 um eine Drehachse, nämlich um eine Messerlagerung 27 herum drehbar im Grundkörperteil 16 gehalten ist, wobei an der einen Seite des Messerhalters 20 ein Feststellstift 22 angeordnet ist, der das im Messerhalter 20 fest eingespannte Entgratmesser 9 arretiert.

Das Entgratmesser 9 ist als einseitig schneidendes Messer ausgebildet, wobei die Schneidkante 39 unten liegend dargestellt ist und der vorderste Teil des Entgratmessers 9 durch eine Gleitkugel 24 gebildet ist, mit der sich das Entgratmesser an dem Rohrinnenmantel 18 des Werkstücks 1 gleitend anlegt.

Die Figur 1a zeigt den erfindungsgemäß zu vermeidenden Kollisionsfall, wenn das Entgratmesser 9 mit seiner Längsachse schräg auf den Rohrinnenmantel 18 auftrifft und die Gleitkugel 24 keine Möglichkeit mehr hat, auszuweichen, weil die Gleitkugel in Pfeilrichtung 11 weiter auf den Rohrinnenmantel 18 zubewegt wird und in diesem Fall (wie in der Zeichnung nach Figur 1a) das Entgratmesser abbrechen würde.

Dieser unerwünschte Bruchfall liegt demnach in Pfeilrichtung 19 im Segment 8c vor, wie anhand der Figur 1 erläutert wurde.

Der gleiche Fall ist nochmals in Figur 1b dargestellt, nämlich der Bruchfall im Segment 8c, wo erkennbar ist, dass das Entgratmesser 9 mit seiner an der vorderen Seite angeordneten Gleitkugel 24 in einer neutralen Stellung am Rohrinnenmantel 18 anliegt und weder in Pfeilrichtung 26 nach unten noch in Pfeilrichtung 26' nach oben ein Ausweichspiel hat, weil es in der neutralen Stellung gehalten wird und keinerlei auslenkendes Drehmoment auf das Entgratmesser 9 wirkt.

Dieser Kollisionsfall ergibt sich dann, wenn die Messerachse 55 des Entgratmessers 9, die mit der Nulllage 25 bezeichnet ist, einen Winkel (Neutralwinkel 51) von 90° zur Längsachse 50 des Entgratwerkzeuges 10 bildet.

Ein solcher Bruchfall soll erfindungsgemäß vermieden werden.

Hier setzt die Erfindung ein, die gemäß Figur 1c vorsieht, dass von vorne herein verhindert wird, dass das Entgratmesser 9 in eine Neutral- oder Null-Lage 25 gemäß Figuren 1a und 1b gelangt, in dem erfindungsgemäß vorgesehen ist, dass das Entgratmesser 9 stets in einer von der Null-Lage 25 abweichenden Winkelstellung im Grundkörperteil 16 schwenkbar und federbelastet gehalten wird und mittels einer Rücklaufsperre vor dem Zurückschwenken in die 90-Grad-Position geschützt ist.

Während in Figur 1c noch der Neutralwinkel 51 als zu vermeidender Winkel eingezeichnet ist, der demnach vermieden werden soll, zeigt die gleiche Darstellung, dass erfindungsgemäß nunmehr dem Entgratmesser 9 ein Zusatzwinkel 53 zugeordnet wird, so dass seine Neutrallage nun dem neuen Neutralwinkel 52 entspricht.

Dies erfolgt erfindungsgemäß dadurch, dass sich das untere Ende 30a der Biegefeder 30 in eine Steuernut 31 hinein erstreckt, aber nur die eine Seite der Biegefeder 30 an der einen Steuerkante 32 (siehe Figur 1d) der Steuernut 31 anlegt, während die gegenüber liegende Steuerkante 34 frei bleibt und eine Rücklaufsperre für den Messerhalter 20 bildet.

Gemäß Figur 1 d ist die Steuernut 31 als radial nach außen gerichtete, einseitig offene Nut im Messerhalter 20 ausgebildet, deren Weite geringfügig größer ist als die Breite des in die Steuernut 31 eingreifenden Endes 30a der Biegefeder 30. Sie ist etwa U-förmig profiliert und der Basisschenkel des U-Profils ist parallel zu einer radialen Geraden durch die Messerlagerung 27 gerichtet. Die Seitenschenkel des U-Profils bilden die symmetrisch einander gegenüber liegenden Steuerkanten 32, 34, die sich über abgerundete Seitenflächen radial nach außen öffnen. Das U-förmige Profil der Steuernut 31 ist symmetrisch zur Radialachse durch die Messerlagerung 27. Die untere Stirnseite 30b der Biegefeder 20 bildet einen Abstand zum Basisschenkel des U-Profils, sodass sich dort eine Freistellung 33 ergibt.

Damit ist eine Vorbelastung des Messerhalters 20 nur in Pfeilrichtung 26 gegeben und aus der Darstellung in Figur 1d ist erkennbar, dass nun das Messer um das Drehmoment 54 aufgrund seiner Schrägstellung in Pfeilrichtung 26 weiter nach unten verschwenkt wird und eine Bruchgefahr damit verhindert wird.

Wesentlich ist demnach, dass sich die Biegefeder 30 mit ihrem unteren Ende 30a nur im Abstand in die Steuernut 31 hinein erstreckt und nun lediglich mit einer Seitenkante an der einen Steuerkante 32 anlegt und somit der Messerhalter nur in der einen Richtung (Ausweichspiel 26) federbelastet vorspannt, während in der anderen Richtung die Biegefeder 30 mit ihrem Ende 30a sofort an der gegenüberliegenden Steuerkante 34 anlegen würde und das Messer gegen ein Zurückschwenken sperrt. Das ist die erfindungsgemäße Rücklaufsperre.

Damit ist das Entgratmesser in einer ausgeschwenkten, von 90° abweichenden Stellung aus dem Grundkörperteil 16 des Entgratwerkzeuges 10 federbelastet gehalten.

Die Figur 1d zeigt auch, dass sich aufgrund des Abstandes zwischen dem Drehlager des Messers, welches durch die Messerlagerung 27 gegeben ist, und dem Angriffspunkt des Entgratmessers am Rohrinnenmantel 18 sich nunmehr ein Abstand 29 ergibt, der erfindungsgemäß erwünscht ist und der zur Erreichung eines Drehmomentes 54 notwendig ist. Das gewünschte Drehmoment 54 dreht das Entgratmesser 9 stets aus einer unerwünschten Totlage.

Im Bruchfall - wie anhand der Figuren 1a und 1b geschildert wurde - fehlt dieser Abstand 29 und dadurch fehlt das Drehmoment 54, welches zu einer Auslenkung des Entgratmessers aus der neutralen Position sorgen könnte.

Die Auslenkung der Biegefeder 30 in der Weise, dass sich nur die linke Seite der Biegefeder 30 an der einen Steuerkante 32 der Steuernut 31 anlegt, erfolgt durch einen Federvorspannbolzen 28, der sich an der Seitenwand der Biegefeder 30 anlegt und diese so schräg nach außen auslenkt, dass sich die Steuerkante 32 an der Biegefeder 30 anlegt und somit der Messerhalter 20 schräg nach unten ausgelenkt arretiert bleibt.

Der Messerhalter 20 hat in der gezeichneten Stellung nach Figur 1d ein kleines Spiel, was jedoch nicht wesentlich ist.

Das Messer kann also nicht mehr zurück in die neutrale Stellung, weil dies von der Anlage der Steuerkante 34 an der Stirnseite 30b der Biegefeder 30 verhindert werden würde.

Demnach wird die Biegefeder 30 aus ihrer neutralen Ruheposition durch den Federvorspannbolzen 28 in eine Schrägstellung gebracht und dafür gesorgt, dass lediglich eine Seitenkante der Biegefeder 30 an der Steuerkante 32 der Steuernut 31 anliegt.

Es kann in einer Weiterbildung vorgesehen sein, dass der Federvorspannbolzen 28 einstellbar ausgebildet ist und als Exzenterbolzen drehbar ist, um das Einstellspiel oder das Ausweichen der Biegefeder 30 in eine Schräglage einstellbar zu gestalten.

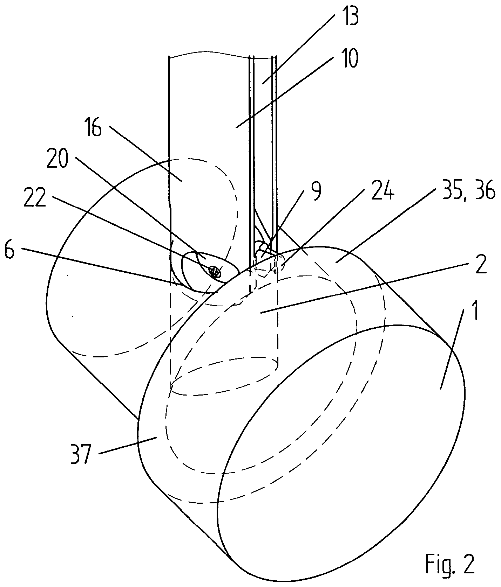

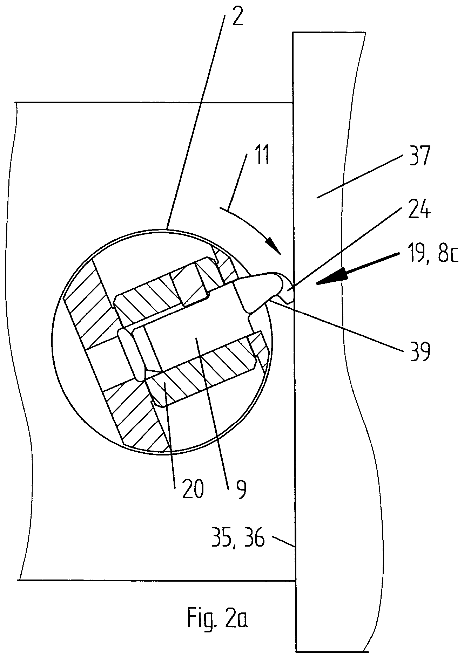

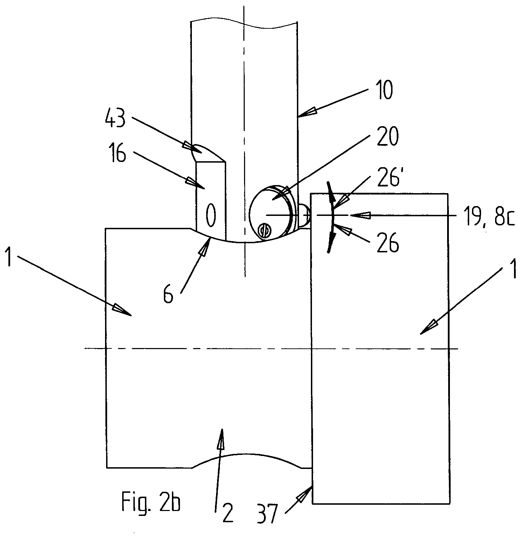

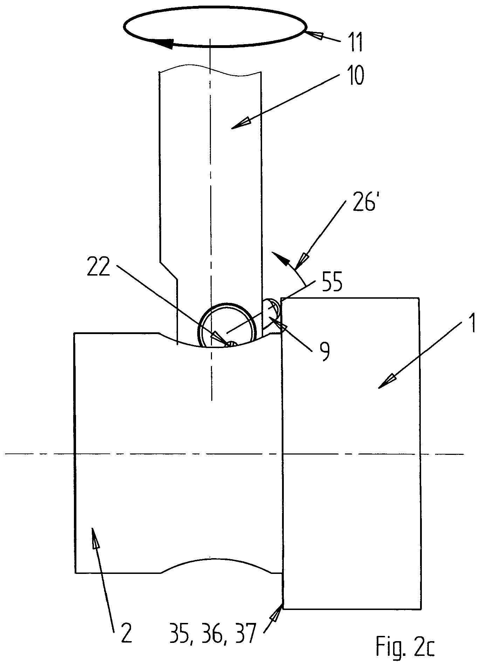

Die Figur 2 zeigt einen weiteren Ausführungsfall der vorliegenden Erfindung, wobei in einem massiven Werkstück 1 eine Querbohrung 2 angeordnet ist und die Entgratung der Querbohrung 2 durch einen am Werkstück 1 vorstehenden Flanschring 37 gestört wird.

Die Querbohrung 2 liegt so nahe am Flanschring 37 an, dass wieder der Bruchfall gemäß Figur 2 eintritt, so dass das in einer neutralen Position von 90° aus dem Grundkörperteil 16 ausgeschwenkte Entgratmesser 9 mit seiner Gleitkugel 24 an der Stirnfläche 35 des Flanschrings 37 aufläuft, wobei dann diese Stirnfläche 35 die Störkontur 36 ausbildet.

Es liegt nun wieder der Kollisionsfall vor, weil in Pfeilrichtung 19 in dem Entgratsegment 8c der in Pfeilrichtung 11 angetriebene Messerhalter 20 mit dem dort eingespannten Entgratmesser 9 nicht ausweichen kann, und das Entgratmesser mit seiner Gleitkugel 24 in der Zeichnung nach Figur 2a abbrechen würde.

Der gleiche Kollisionsfall ist in Figur 2b ähnlich wie der Kollisionsfall in Figur 1b dargestellt, wo erkennbar ist, dass im Bereich der Querbohrung 2 der rechte Bohrungsrand so nahe am Flanschring 37 anliegt, so dass wieder der Kollisionsfall entsteht und das um 90° aus dem Entgratwerkzeug 10 herausgeschwenkte Messer weder ein noch oben noch ein nach unten gerichtetes Ausweichspiel 26, 26' einnehmen kann, so dass es abbrechen würde.

Hier setzt gemäß Figur 2c die Erfindung ein, die vorsieht, dass bei einem im Uhrzeigersinn angetriebenen Entgratwerkzeug 10 nunmehr das Entgratmesser 9 eine ständig vorgegebene Schrägstellung als Neutralstellung der Messerachse 55 einnimmt und damit der Kollisionsfall nach Figur 2b und 2a vermieden wird.

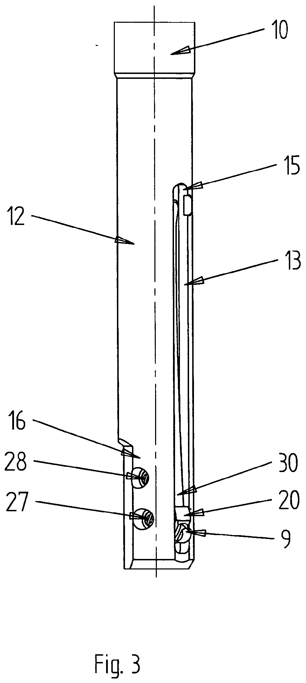

Die Figur 3 zeigt eine erste Ausführungsform eines Entgratwerkzeuges 10, bei dem die weiteren Einzelheiten dargestellt sind, die bereits schon anhand der Figur 1 dargestellt wurden.

Es ist erkennbar, dass am Grundkörper 12 am unteren Ende der Grundkörperteil 16 mit verringertem Durchmesser angesetzt ist und in diesem Bereich das Entgratmesser 9 in einer ständigen Schräglage der Messerachse 55 federbelastet gehalten ist.

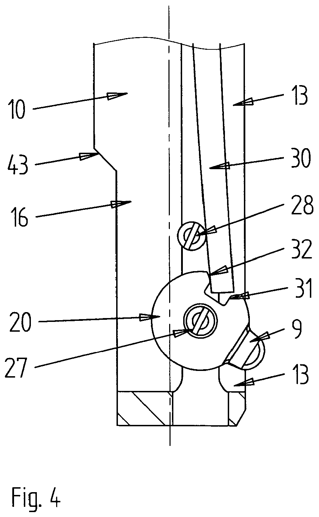

Die Figur 4 zeigt als erstes Ausführungsbeispiel eine Möglichkeit, wie die Biegefeder 30 in einer federvorbelasteten Schrägstellung gehalten werden kann.

Hierzu ist der Federvorspannbolzen 28 vorgesehen, der sich an der Innenseite der Biegefeder 30 anlegt, so dass sich diese schräg und federbelastet am Federvorspannbolzen 28 abstützt und dafür sorgt, dass sich nur noch der Messerhalter 20 mit seiner Steuernut 31 mit Hilfe der Steuerkante 32 an der einen Seite der Biegefeder 30 anlegt, um so den Messerhalter 20 in einer nach unten gerichteten Schräglage in der Neutralposition federvorbelastet zu halten.

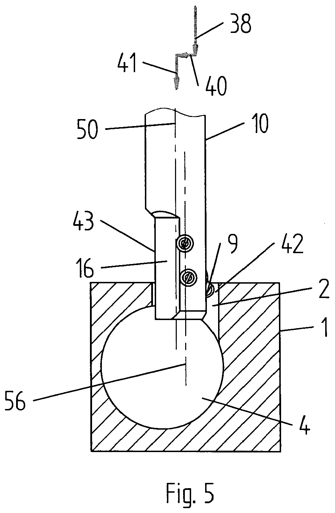

Die Figuren 5 bis 7 zeigen den Prozessablauf bei der Anwendung des erfindungsgemäßen Verfahrens.

In einem ersten Verfahrensschritt wird das Entgratwerkzeug 10 in Pfeilrichtung 38 zentrisch zur Querbohrungsachse 56 der Querbohrung 2 so lange in die Querbohrung 2 eingefahren, bis sich die Gleitkugel 24 des Entgratmessers 9 noch außerhalb der Querbohrung 2 befindet.

Sobald die Gleitkugel 24 vor der Stirnkante der Querbohrung 2 steht, wird die Vorschubbewegung in Pfeilrichtung 38 unterbrochen und es erfolgt in einem nächsten Verfahrensschritt eine Bewegung in Querrichtung 40, um den Grundkörper 12 des Entgratwerkzeuges exzentrisch und quer zur Querbohrungsachse 56 des Entgratwerkzeuges 10 zu bewegen.

Damit wird sichergestellt, dass das bereits schon aus dem Grundkörper 12 herausragende Entgratmesser 9 nicht mit der rechten Seite der Querbohrung 2 kollidiert und dadurch ergibt sich ein Freispiel 42.

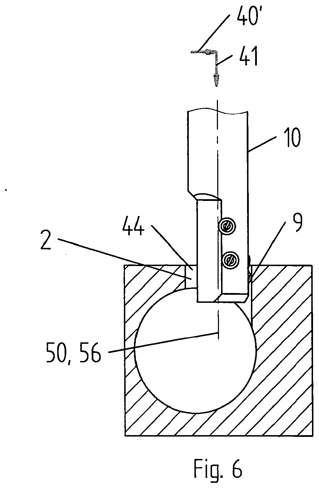

Sobald das Freispiel 42 erreicht wurde, kann in Pfeilrichtung 41 weiter in Längsrichtung in die Querbohrung 2 eingefahren werden, bis die Gleitkugel 24 in die Querbohrung 2 eingetaucht ist, und erst dann wird nach Figur 6 in Pfeilrichtung 40' in Querrichtung zurückgefahren, um so die Längsachse 50 des Entgratwerkzeuges 10 in Deckung mit der Querbohrungsachse 56 der Querbohrung 2 zu bringen.

Damit wird das Messer 9 schon aus seiner schräg ausgefahrenen Stellung federbelastet in eine weitere schräg ausgefahrene Stellung gebracht, ohne dass Kollisionsgefahr oder Bruchgefahr besteht.

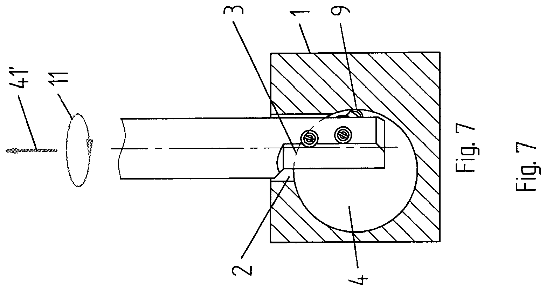

Die Längsbewegung in Längsrichtung 41 geht so lange im Übergang von Figur 6 nach Figur 7, bis das Entgratwerkzeug in seiner Startstellung gemäß Figur 7 zu Beginn des Entgratvorganges vorgeschoben wurde.

Von dieser Startstellung ausgehend wird das Entgratwerkzeug 10 in Pfeilrichtung 11 angetrieben und führt den Entgratvorgang aus, wobei sich das Entgratmesser 9 mit seiner Schneidkante 39 an der Innenseite der Querbohrung 2 anlegt und eine in Umfangsrichtung fortschreitende Entgratung des Innenrandes 3 der Querbohrung 2 ausführt.

Dies erfolgt beim Zurückfahren in Pfeilrichtung 41'.

Aus dieser Darstellung wird deutlich, dass bei dem ständig in seiner Entgratstellung federbelastet schräg nach unten gehaltenen Entgratmesser 9 eine Bruchgefahr an einer Störkontur 36 nicht mehr besteht.

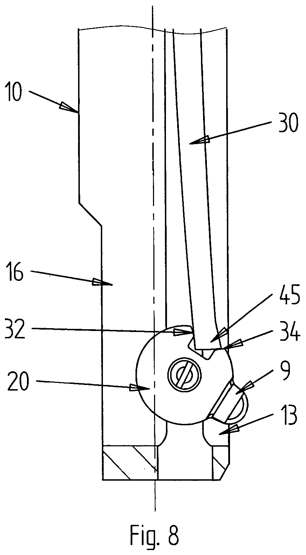

Die Figur 8 zeigt als abgewandeltes Ausführungsbeispiel gegenüber dem Ausführungsbeispiel nach Figur 4, dass der Federvorspannbolzen 28 auch entfallen könnte und stattdessen das Ende 30a der Biegefeder 30 als Konuserweiterung 45 ausgebildet sein könnte, so dass die Konuserweiterung sowohl an der linken Steuerkante 32 als auch an der rechten Steuerkante 34 der Steuernut 31 anliegt und so das Entgratmesser 9 federvorbelastet in der schräg nach unten gerichteten Stellung hält, ohne dass es in eine 90° ausgestellte Position zurückschwenken kann. Dies ist eine weitere Ausführung einer Rücklaufsperre.

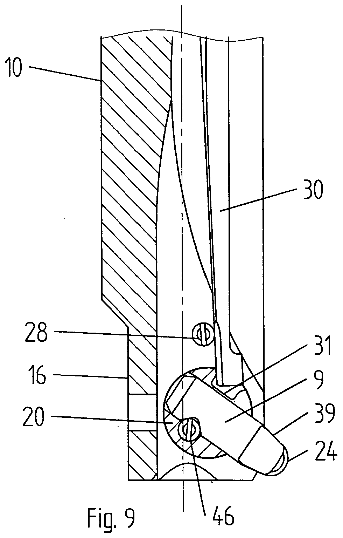

Die Figur 9 zeigt als weiteres Ausführungsbeispiel, dass der Messerhalter nicht notwendiger Weise einstückig mit dem Entgratmesser 9 verbunden sein muss. Die Figur 9 zeigt stattdessen einen Messerhalter 20, bei dem das Entgratmesser 9 lösbar im Messerhalter gehalten wird und die lösbare Halterung durch einen Haltebolzen 46 erreicht wird, der in eine seitlich offene Nut an dem Entgratmesser 9 eingreift.

Somit kann das Entgratmesser 9 beim Lösen des Haltebolzens 46 vom Messerhalter 20 abgezogen werden.

Ansonsten gelten für die gleichen Teile die gleichen Bezugszeichen.

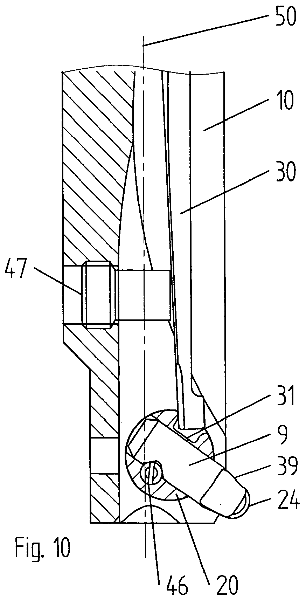

Die Figur 10 zeigt als weiteres Ausführungsbeispiel, dass die in Schrägrichtung gegebene Vorspannung der Biegefeder 30 auch durch einen in senkrechter Richtung zur Längsachse 50 des Entgratwerkzeuges 10 angeordneten Vorspannbolzen 47 erfolgen kann, der ebenfalls die Biegefeder 30 schräg vorspannt, so dass dafür gesorgt ist, dass sich die eine Steuerkante 32 der Steuernut 31 an der einen Seite der Biegefeder 30 anlegt und verhindert, dass das Entgratmesser 9 in eine um 90° herausgeschwenkte Neutralposition begibt. Es wird stattdessen immer in einer schräg nach unten gerichteten Position federbelastet arretiert.

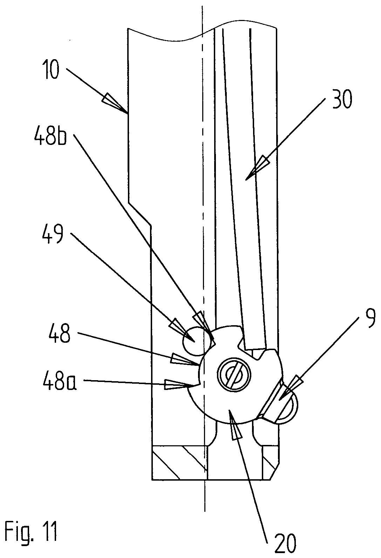

Die gleiche Funktion zeigt das Ausführungsbeispiel nach Figur 11, wo erkennbar ist, dass am Messerhalter 20 eine Umfangsnut 48 verringerten Durchmessers angeordnet ist, die beidseitig die Anschläge 48a, 48b bildet und im Bereich der Umfangsnut 48 ein Sperrbolzen 49 angeordnet ist.

Der Sperrbolzen 49 bildet demnach ebenfalls eine Anschlagbegrenzung für das schräge nach außen gerichtete Ausschwenken des Entgratmessers 9, so dass es nicht auf die Anlage der Biegefeder 30 an der Steuerkante 32 ankommt, weil diese schräge Vorspannung oder Anschlagbegrenzung durch den Sperrbolzen 49 erfolgt.

Bei diesem Ausführungsbeispiel wird deutlich, dass auch die Biegefeder 30 entfallen könnte und stattdessen eine Spiralfeder oder Schraubendruckfeder den Messerhalter 25 in seiner ausgeschwenkten Stellung federvorbelastet halten kann.

Die Anordnung einer einseitig eingespannten Biegefeder, deren freies Ende sich am Messerhalter abstützt, kann also auch durch andere Federvorspannvorrichtungen oder allgemein - Kraftspeicher - ersetzt werden.

### Zeichnungslegende

- 1: Werkstück (Rohr)
- 2: Querbohrung
- 3: Innenrand (von 2)
- 4: Hauptbohrung
- 5: Stirnfläche (von 1) a, b
- 6: Außenrand (von 2)
- 7: Pfeilrichtung
- 8: Segment a, b, c, d
- 9: Entgratmesser
- 10: Entgratwerkzeug
- 11: Pfeilrichtung
- 12: Grundkörper
- 13: Längsnut
- 14: Schrauben
- 15: Klemmleiste
- 16: Grundkörperteil
- 17: Rohrwandung (von 1)
- 18: Rohrinnenmantel
- 19: Pfeilrichtung
- 20: Messerhalter
- 21: Lagerbohrung für 9'
- 22: Feststellstift
- 23 24: Gleitkugel
- 25: Null-Lage
- 26: Ausweichspiel 26'
- 27: Messerlagerung
- 28: Federvorspannbolzen
- 29: Abstand
- 30: Biegefeder 30a Ende 30b Stirnseite
- 31: Steuernut
- 32: Steuerkante
- 33: Freistellung
- 34: Steuerkante
- 35: Stirnfläche (von 1)
- 36: Störkontur
- 37: Flanschring
- 38: Pfeilrichtung
- 39: Schneidkante (von 9)
- 40: Querrichtung 40'
- 41: Längsrichtung 41'
- 42: Freispiel
- 43: Freistellung (vorn)
- 44: Freistellung (hinten)
- 45: Konuserweiterung
- 46: Haltebolzen
- 47: Vorspannbolzen
- 48: Umfangsnut 48a, 48b Anschlag
- 49: Sperrbolzen
- 50: Längsachse
- 51: Neutralwinkel (alt)
- 52: Neutralwinkel (neu)
- 53: Zusatzwinkel
- 54: Drehmoment
- 55: Messerachse
- 56: Querbohrungsachse

## Patentansprüche

1. Entgratwerkzeug mit Entgratmesser (9) zum Entgraten von Bohrungsrändern (3, 6) mit gerader oder unrunder Form, bestehend aus einem um seine Längsachse (50) drehbar angetriebenen Grundkörper (12), an dessen unteren Ende mindestens ein Messerhalter (20) mit mindestens einem dort befestigten Entgratmesser (9) in vertikaler Richtung schwenkbar auf einer grundkörperseitigen Messerlagerung (27) gelagert ist, und am Außenumfang des Messerhalters (20) eine in radialer Richtung nach außen offene Steuernut (31) angeordnet ist, in welche das freie biegbare Ende (30a) einer Biegefeder (30) eingreift, deren anderes Ende am Grundkörper (12) eingespannt ist, wobei während des Entgratvorganges das Entgratmesser (9) aus dem Grundkörper (12) um einen Winkel (51, 52, 53) zur Längsachse des Grundkörpers (12) ausgeschwenkt ist und die Messerachse (55) des Entgratmessers (9) mit seiner mindestens einen Schneidkante (39) auf dem zu entgratenden Bohrungsrand (3, 6) federbelastet anliegt und bei der Drehung des Entgratwerkzeuges der Kontur des Bohrungsrands (3, 6) folgend federbelastete Schwenkbewegungen ausführt, wobei das Entgratmesser (9) in der aus dem Grundkörper ausgeschwenkten Ruhelage mit seiner Messerachse (55) eine von der 90 Grad Stellung abweichende, abgewinkelte Schwenkstellung (52, 53) bildet, wobei dem Entgratmesser (9) eine Rücklaufsperre zugeordnet ist, welche ein Zurückschwenken in die um 90 Grad aus dem Grundkörper (12) heraus geschwenkte Stellung verhindert,
**dadurch gekennzeichnet, dass** die Steuernut (31) als radial nach außen geöffnetes U-Profil ausgebildet ist und die Seitenschenkel des U-Profils symmetrisch einander gegenüber liegende Steuerkanten (32, 34) bilden, die sich über abgerundete Seitenflächen radial nach außen öffnen, wobei sich die eine Seite der Biegefeder (30) an der einen Steuerkante (32) in der Steuernut (31) federbelastet anlegt und die gegenüberliegende Steuerkante (34) in der Steuernut (31) die Rücklaufsperre für den Messerhalter (20) bildet.

2. Entgratwerkzeug nach Anspruch 1, **dadurch gekennzeichnet, dass** der Messerhalter (20) als annähernd zylindrischer oder scheibenförmiger Körper ausgebildet ist und um eine Messerlagerung (27) drehbar im Grundkörperteil (16) gehalten ist, wobei das Entgratmesser (9) am Außenumfang des Messerhalters (20) angeordnet ist.

3. Entgratwerkzeug nach Anspruch 1 oder 2, **dadurch gekennzeichnet, dass** für den Fall des Einsatzes des Entgratwerkzeuges für eine Rückwärtsentgratung, die Schrägstellung der Messerachse (55) um einen negativen Zusatzwinkel (53) erfolgt, der im Bereich zwischen 0 bis 80° liegt.

4. Entgratwerkzeug nach einem der Ansprüche 1 bis 3, **dadurch gekennzeichnet, dass** für den Fall des Einsatzes des Entgratwerkzeuges für eine Vorwärtsentgratung, die Schrägstellung der Messerachse (55) um einen positiven Zusatzwinkel (53) erfolgt, der im Bereich zwischen 0 bis 80° liegt.

5. Entgratwerkzeug nach einem der Ansprüche 1 bis 4, **dadurch gekennzeichnet, dass** das Entgratmesser (9) als einseitig schneidendes Messer mit einer einseitig angeordneten Schneidkante (39) ausgebildet ist und dass der vorderste Teil des Entgratmessers (9) durch eine Gleitkugel (24) gebildet ist, mit der sich das Entgratmesser (9) an einem Rohrinnenmantel (18) des Werkstücks (1) gleitend anlegt.

6. Entgratwerkzeug nach einem der Ansprüche 1 bis 5, **dadurch gekennzeichnet, dass** die Neutralstellung des Entgratmessers (9) durch einen Neutralwinkel (52) definiert ist, der um einen Zusatzwinkel von der um 90 Grad aus dem Grundkörper ausgeschwenkten Stellung der Messerachse (55) abweicht und dass diese Neutralstellung des Entgratmessers (9) durch den einseitigen Eingriff des unteren Endes (30a) der Biegefeder (30) in die messerhalterseitige Steuernut (31) definiert ist.

7. Entgratwerkzeug nach einem der Ansprüche 1 bis 6, **dadurch gekennzeichnet, dass** die Weite der Steuernut (31) größer ist, als die Breite des in die Steuernut (31) eingreifende Ende (30a) der Biegefeder (30).

8. Entgratwerkzeug nach einem der Ansprüche 1 bis 7, **dadurch gekennzeichnet, dass** die Biegefeder (30) aus ihrer neutralen Ruheposition durch einen Federvorspannbolzen (28) in eine Schrägstellung bringbar ist und dadurch lediglich eine Seitenkante der Biegefeder (30) an der Steuerkante (32) der Steuernut (31) anliegt.

9. Entgratwerkzeug nach einem der Ansprüche 1 bis 8, **dadurch gekennzeichnet, dass** ein in senkrechter Richtung zur Längsachse (50) des Entgratwerkzeuges (10) angeordneter Vorspannbolzen (47) die Biegefeder (30) vorspannt, so dass die eine Steuerkante (32) der Steuernut (31) an der einen Seite der Biegefeder (30) anliegt.

10. Verfahren zum Betrieb eines Entgratwerkzeuges zum Rückwärtsentgraten von Bohrungsrändern (3, 6) mit gerader oder unrunder Form, bestehend aus einem um seine Längsachse (50) drehbar angetriebenen Grundkörper (12), an dessen unteren Ende mindestens ein Messerhalter (20) mit mindestens einem dort befestigten Entgratmesser (9) in vertikaler Richtung schwenkbar auf einer grundkörperseitigen Messerlagerung (27) gelagert ist, und am Außenumfang des Messerhalters (20) eine in radialer Richtung nach außen offene Steuernut (31) angeordnet ist, in welche das freie biegbare Ende (30a) einer Biegefeder (30) eingreift, deren anderes Ende am Grundkörper (12) eingespannt ist, wobei während des Entgratvorganges das Entgratmesser (9) aus dem Grundkörper (12) um einen Winkel (51, 52, 53) zur Längsachse des Grundkörpers (12) ausgeschwenkt ist und die Messerachse (55) des Entgratmessers (9) mit seiner mindestens einen Schneidkante (39) auf dem zu entgratenden Bohrungsrand (3, 6) federbelastet anliegt und bei der Drehung des Entgratwerkzeuges der Kontur des Bohrungsrands (3, 6) folgend federbelastete Schwenkbewegungen ausführt, **dadurch gekennzeichnet, dass**
10.1. in einem ersten Verfahrensschritt das Entgratwerkzeug (10) zentrisch zur Querbohrungsachse (56) einer zu entgratenden Querbohrung (2) so lange auf die Querbohrung (2) eingefahren wird, bis sich eine Gleitkugel (24) am vorderen freien Ende des stabförmigen Entgratmessers (9) noch außerhalb der Querbohrung 2 befindet,
10.2. dass in einem zweiten Verfahrensschritt die Vorschubbewegung unterbrochen wird, sobald die Gleitkugel (24) vor der Stirnkante der Querbohrung (2) steht,
10.3. dass in einem dritten Verfahrensschritt das Entgratwerkzeug (10) eine Bewegung in Querrichtung (40) ausführt, um das Entgratwerkzeug (10) exzentrisch und quer zur Querbohrungsachse (56) solange zu bewegen, bis sich ein radiales Freispiel (42) zwischen dem aus dem Entgratwerkzeug ausgeschwenkten Entgratmesser (9) und der Querbohrung (2) ergibt,
10.4. dass in einem vierten Verfahrensschritt das Entgratwerkzeug (10) weiter in Längsrichtung in die Querbohrung (2) eingefahren wird, bis die Gleitkugel (24) in die Querbohrung 2 eingetaucht ist,
10.5. dass in einem fünften Verfahrensschritt das Entgratwerkzeug (10) in Querrichtung zurückgefahren wird, um die Längsachse (50) des Entgratwerkzeuges (10) in Deckung mit der Querbohrungsachse (56) der Querbohrung (2) zu bringen,
10.6. dass in einem sechsten Verfahrensschritt die Längsbewegung so lange weitergeführt wird, bis das Entgratwerkzeug (10) in seiner Startstellung zu Beginn des Entgratvorganges vorgeschoben wurde,
10.7. und dass einem siebten Verfahrensschritt von dieser Startstellung ausgehend das Entgratwerkzeug (10) drehend angetrieben wird und den Entgratvorgang ausführt, wobei sich beim Zurückfahren des Entgratwerkzeuges (10) in vertikaler Richtung das Entgratmesser (9) mit seiner Schneidkante (39) an der Innenseite der Querbohrung (2) anlegt und eine in Umfangsrichtung fortschreitende Entgratung des Innenrandes (3) der Querbohrung (2) ausführt.

11. Verfahren nach Anspruch 10, **dadurch gekennzeichnet, dass** die neutrale Stellung des Entgratmessers (9) nicht mehr die um 90° aus dem Grundkörper (12) des Entgratwerkzeuges (10) ausgeschwenkte Stellung ist, sondern dass das Entgratmesser (9) mit seiner Messerachse (55) eine zur neutralen Stellung (51) abgewinkelte Schwenkstellung einnimmt und dass dem Entgratmesser eine Rücklaufsperre zugeordnet ist, welche ein Zurückschwenken in die 90 Grad Stellung (51) verhindert.

## Claims

1. Deburring tool with deburring blade (9) for deburring bore edges (3, 6) with a straight or non-round shape, consisting of a base body (12) driven rotatably about its longitudinal axis (50), on the lower end of which at least one blade holder (20) having at least one deburring blade (9) attached there is mounted in vertical direction pivotably on a base body-side blade bearing (27), and on the outer circumference of the blade holder (20) is arranged a control groove (31) open to the outside in radial direction into which the free flexible end (30a) of a spiral spring (30) engages, the other end of which is clamped on the base body (12), wherein during the deburring process, the deburring blade (9) is pivoted out from the base body (12) by an angle (51, 52, 53) to the longitudinal axis of the base body (12) and the blade axis (55) of the deburring blade (9) rests in a spring-loaded manner with its at least one cutting edge (39) on the bore edge (3, 6) to be deburred and during rotation of the deburring tool executes spring-loaded pivot movements following the contour of the bore edge (3, 6), wherein the deburring blade (9) in the rest position pivoted out from the base body with its blade axis (55) forms an angular pivot position (52, 53) deviating from the 90 degree position, wherein a backstop, which prevents back-pivoting into the position pivoted out from the base body (12) by 90 degrees, is assigned to the deburring blade (9), **characterised in that** the control groove (31) is configured as a radially outwardly opened U profile and the side limbs of the U profile form control edges (32, 34) symmetrically opposite one another which are opened radially outwards via rounded side surfaces, wherein the one side of the spiral spring (30) is placed in spring-loaded manner on the one control edge (32) in the control groove (31) and the opposite control edge (34) in the control groove (31) forms the backstop for the blade holder (20).

2. Deburring tool according to claim 1, **characterised in that** the blade holder (20) is configured as an approximately cylindrical or disc-like body and is held rotatably in the base body part (16) about a blade bearing (27), wherein the deburring blade (9) is arranged on the outer circumference of the blade holder (20).

3. Deburring tool according to claim 1 or 2, **characterised in that** when the deburring tool is used for rearward deburring, the inclined position of the blade axis (55) is effected about a negative additional angle (53) which lies in the range between 0 to 80°.

4. Deburring tool according to one of claims 1 to 3, **characterised in that** when the deburring tool is used for forward deburring, the inclined position of the blade axis (55) is effected about a positive additional angle (53) which lies in the range between 0 to 80°.

5. Deburring tool according to one of claims 1 to 4, **characterised in that** the deburring blade (9) is configured as a blade cutting on one side with a cutting edge (39) arranged on one side and **in that** the foremost part of the deburring blade (9) is formed by a sliding bearing (24), with which the deburring blade (9) is placed in sliding manner on a tubular inner surface (18) of the workpiece (1).

6. Deburring tool according to one of claims 1 to 5, **characterised in that** the neutral position of the deburring blade (9) is defined by a neutral angle (52) which deviates by an additional angle from the position of the blade axis (55) pivoted out from the base body by 90 degrees and **in that** this neutral position of the deburring blade (9) is defined by the one-sided engagement of the lower end (30a) of the spiral spring (30) into the blade holder-side control groove (31).

7. Deburring tool according to one of claims 1 to 6, **characterised in that** the width of the control groove (31) is greater than the breadth of the end (30a) of the spiral spring (30) engaging into the control groove (31).

8. Deburring tool according to one of claims 1 to 7, **characterised in that** the spiral spring (30) can be brought out from its neutral rest position into an inclined position by a spring preloading pin (28) and thus only one side edge of the spiral spring (30) rests on the control edge (32) of the control groove (31).

9. Deburring tool according to one of claims 1 to 8, **characterised in that** a preloading pin (47) arranged in vertical direction to the longitudinal axis (50) of the deburring tool (10) preloads the spiral spring (30) so that the one control edge (32) of the control groove (31) rests on the one side of the spiral spring (30).

10. Method of operating a deburring tool for rearward deburring of bore edges (3, 6) with a straight or non-round shape, consisting of a base body (12) driven rotatably about its longitudinal axis (50), on the lower end of which at least one blade holder (20) having at least one deburring blade (9) attached there is mounted in vertical direction pivotably on a base body-side blade bearing (27), and on the outer circumference of the blade holder (20) is arranged a control groove (31) open to the outside in radial direction into which the free flexible end (30a) of a spiral spring (30) engages, the other end of which is clamped on the base body (12), wherein during the deburring process, the deburring blade (9) is pivoted out from the base body (12) by an angle (51, 52, 53) to the longitudinal axis of the base body (12) and the blade axis (55) of the deburring blade (9) rests in a spring-loaded manner with its at least one cutting edge (39) on the bore edge (3, 6) to be deburred and during rotation of the deburring tool executes spring-loaded pivot movements following the contour of the bore edge (3, 6), **characterised in that**
10.1. in a first method step, the deburring tool (10) is moved in onto the transverse bore (2) centrally to the transverse bore axis (56) of a transverse bore (2) to be deburred until a sliding bearing (24) is located on the front free end of the rodlike deburring blade (9) still outside of the transverse bore 2,
10.2. **in that** in a second method step, the advance movement is interrupted as soon as the sliding bearing (24) is in front of the end-face edge of the transverse bore (2),
10.3. **in that** in a third method step, the deburring tool (10) executes a movement in transverse direction (40) in order to move the deburring tool (10) eccentrically and transversely to the transverse bore axis (56) until a radial clearance (42) is produced between the deburring blade (9) pivoted out from the deburring tool and the transverse bore (2),
10.4. **in that** in a fourth method step, the deburring tool (10) is moved further into the transverse bore (2) in longitudinal direction until the sliding bearing (24) enters the transverse bore 2,
10.5. **in that** in a fifth method step, the deburring tool (10) is moved back in transverse direction in order to bring the longitudinal axis (50) of the deburring tool (10) into congruence with the transverse bore axis (56) of the transverse bore (2),
10.6. **in that** in a sixth method step, the longitudinal movement is continued until the deburring tool (10) has been advanced into its start position at the beginning of the deburring process,
10.7. and **in that** in a seventh method step, proceeding from this start position, the deburring tool (10) is driven rotatably and executes the deburring process, wherein when returning the deburring tool (10) in vertical direction, the deburring blade (9) is placed with its cutting edge (39) on the inner side of the transverse bore (2) and executes deburring of the inner edge (3) of the transverse bore (2) continuing in the circumferential direction.

11. Method according to claim 10, **characterised in that** the neutral position of the deburring blade (9) is no longer the position pivoted out from the base body (12) of the deburring tool (10) by 90°, but that the deburring blade (9) with its blade axis (55) occupies a pivot position at an angle to the neutral position (51) and **in that** a backstop, which prevents back-pivoting into the 90 degree position (51), is assigned to the deburring blade.

## Revendications

1. Outil d'ébavurage comprenant une lame d'ébavurage (9) pour l'ébavurage de bords de perçages (3, 6) de forme droite ou non ronde, constitué d'un corps de base (12) entraîné en rotation autour de son axe longitudinal (50), à l'extrémité inférieure duquel au moins un porte-lame (20) comprenant au moins une lame d'ébavurage (9) fixée à cet endroit est supporté de manière à pivotable dans la direction verticale sur un support de lame côté corps de base (27), et sur le pourtour extérieur du porte-lame (20) est disposée une rainure de guidage (31) ouverte sur l'extérieur dans la direction radiale dans laquelle vient en prise l'extrémité libre flexible (30a) d'un ressort de flexion (30) dont l'autre extrémité est serrée sur le corps de base (12), dans lequel, pendant l'opération d'ébavurage, la lame d'ébavurage (9) est pivotée hors du corps de base (12) d'un angle (51, 52, 53) par rapport à l'axe longitudinal du corps de base (12) et l'axe de lame (55) de la lame d'ébavurage (9) s'applique, contraint par ressort, avec sa au moins une arête de coupe (39) sur le bord de perçage à ébavurer (3, 6) et, lors de la rotation de l'outil d'ébavurage, décrit des mouvements de pivotement contraints par ressort en suivant le contour du bord de perçage (3, 6), dans lequel la lame d'ébavurage (9) dans la position de repos pivotée hors du corps de base forme avec son axe de lame (55) une position de pivotement (52, 53) coudée, s'écartant de la position à 90 degrés, dans lequel à la lame d'ébavurage (9) est associé un dispositif antiretour qui empêche un retour par pivotement dans la position de pivotement à 90 degrés hors du corps de base,
**caractérisé en ce que** la rainure de guidage (31) est conformée en un profilé en U ouvert radialement vers l'extérieur et les branches latérales du profilé en U forment des arêtes de guidage (32, 34) opposées symétriquement qui s'ouvrent radialement vers l'extérieur par des surfaces latérales arrondies, dans lequel un côté du ressort de flexion (30) s'applique, contraint par ressort, contre une arête de guidage (32) dans la rainure de guidage (31) et l'arête de guidage opposée (34) dans la rainure de guidage (31) forme le dispositif antiretour pour le porte-lame (20).

2. Outil d'ébavurage selon la revendication 1, **caractérisé en ce que** le porte-lame (20) est conformé en un corps approximativement cylindrique ou en forme de plaque et est fixé de manière rotative autour d'un montage de lame (27) dans l'élément de corps de base (16), la lame d'ébavurage (9) étant disposée sur le pourtour extérieur du porte-lame (20).

3. Outil d'ébavurage selon la revendication 1 ou 2, **caractérisé en ce que** pour le cas de la mise en œuvre de l'outil d'ébavurage pour un ébavurage arrière, l'inclinaison de l'axe de lame (55) se fait suivant un angle supplémentaire négatif (53) qui est situé dans la plage entre 0 à 80°.

4. Outil d'ébavurage selon l'une des revendications 1 à 3, **caractérisé en ce que** pour le cas de la mise en œuvre de l'outil d'ébavurage pour un ébavurage avant, l'inclinaison de l'axe de lame (55) se fait suivant un angle supplémentaire positif (53) qui est situé dans la plage entre 0 à 80°.

5. Outil d'ébavurage selon l'une des revendications 1 à 4, **caractérisé en ce que** la lame d'ébavurage (9) est conformée en une lame coupant unilatéralement, comprenant une arête de coupe (39) disposée unilatéralement, et que la partie la plus avant de la lame d'ébavurage (9) est formée par une bille de glissement (24) avec laquelle la lame d'ébavurage (9) s'applique en glissant contre une enveloppe intérieure tubulaire (18) de la pièce à usiner (1).

6. Outil d'ébavurage selon l'une des revendications 1 à 5, **caractérisé en ce que** la position neutre de la lame d'ébavurage (9) est définie par un angle neutre (52) qui s'écarte d'un angle supplémentaire de la position de l'axe de lame (55) pivotée hors du corps de base à 90 degrés et que cette position neutre de la lame d'ébavurage (9) est définie par la mise en prise unilatérale de l'extrémité inférieure (30a) du ressort de flexion (30) dans la rainure de guidage côté porte-lame (31).

7. Outil d'ébavurage selon l'une des revendications 1 à 6, **caractérisé en ce que** la largeur de la rainure de guidage (31) est plus grande que la largeur de l'extrémité (30a) du ressort de flexion (30) venant en prise dans la rainure de guidage (31).

8. Outil d'ébavurage selon l'une des revendications 1 à 7, **caractérisé en ce que** le ressort de flexion (30) est apte à être amené par une tige de précontrainte à ressort (28) de sa position de repos neutre dans une position inclinée, et ainsi seule une arête latérale du ressort de flexion (30) est appliquée contre l'arête de guidage (32) de la rainure de guidage (31).

9. Outil d'ébavurage selon l'une des revendications 1 à 8, **caractérisé en ce qu'**une tige de précontrainte (47) disposée dans la direction verticale par rapport à l'axe longitudinal (50) de l'outil d'ébavurage (10) précontraint le ressort de flexion (30), de sorte qu'une arête de guidage (32) de la rainure de guidage (31) est appliquée contre un côté du ressort de flexion (30).

10. Procédé pour le fonctionnement d'un outil d'ébavurage pour l'ébavurage arrière de bords de perçages (3, 6) de forme droite ou non ronde, constitué d'un corps de base (12) entraîné en rotation autour de son axe longitudinal (50), à l'extrémité inférieure duquel au moins un porte-lame (20) comprenant au moins une lame d'ébavurage (9) fixée à cet endroit est supporté de manière pivotable dans la direction verticale, sur un support de lame côté corps de base (27), et sur le pourtour extérieur du porte-lame (20) est disposée une rainure de guidage (31) ouverte sur l'extérieur dans la direction radiale, dans laquelle vient en prise l'extrémité libre flexible (30) d'un ressort de flexion (30) dont l'autre extrémité est serrée sur le corps de base (12), dans lequel pendant l'opération d'ébavurage, la lame d'ébavurage (9) est pivotée hors du corps de base (12) d'un angle (51, 52, 53) par rapport à l'axe longitudinal du corps de base (12) et l'axe de lame (55) de la lame d'ébavurage (9) est appliqué, contraint par ressort, avec sa au moins une arête de coupe (39) sur le bord de coupe à ébavurer (3, 6) et, lors de la rotation de l'outil d'ébavurage, décrit des mouvements de pivotement contraints par ressort en suivant le contour du bord de perçage (3, 6), **caractérisé en ce que**
10.1. dans une première étape de procédé, l'outil d'ébavurage (10) est amené sur le perçage transversal (2) de manière centrée par rapport à l'axe de perçage transversal (56) d'un perçage transversal à ébavurer (2) jusqu'à ce qu'une bille de glissement (24) à l'extrémité libre avant de la lame d'ébavurage en forme de barre (9) se trouve encore à l'extérieur du perçage transversal 2,
10.2. que dans une deuxième étape de procédé, le mouvement d'avance est interrompu dès que la bille de glissement (24) est devant l'arête frontale du perçage transversal (2),
10.3. que dans une troisième étape de procédé, l'outil d'ébavurage (10) décrit un mouvement dans la direction transversale (40) pour déplacer l'outil d'ébavurage (10) de manière excentrée et transversalement à l'axe de perçage transversal (56) jusqu'à ce qu'un jeu libre radial (42) apparaisse entre la lame d'ébavurage (9) déployée par pivotement hors de l'outil d'ébavurage et le perçage transversal (2),
10.4. que dans une quatrième étape de procédé, l'outil d'ébavurage (10) est introduit davantage dans la direction longitudinale dans le perçage transversal (2) jusqu'à ce que la bille de glissement (24) ait pénétré dans le perçage transversal 2,
10.5. que dans une cinquième étape de procédé, l'outil d'ébavurage (10) est ramené dans la direction transversale pour faire coïncider l'axe longitudinal (50) de l'outil d'ébavurage (10) avec l'axe de perçage transversal (56) du perçage transversal (2),
10.6. que dans une sixième étape de procédé, le mouvement longitudinal est poursuivi jusqu'à ce que l'outil d'ébavurage (10) ait été avancé dans sa position de départ au début de l'opération d'ébavurage,
10.7. que dans une septième étape de procédé, à partir de cette position de départ l'outil d'ébavurage (10) est entraîné en rotation et effectue l'opération d'ébavurage, dans laquelle lorsque l'outil d'ébavurage (10) est ramené dans la direction verticale, la lame d'ébavurage (9) s'applique avec son arête de coupe (39) contre le côté intérieur du perçage transversal (2) et effectue un ébavurage du bord intérieur (3) du perçage transversal (2) qui progresse dans la direction circonférentielle.

11. Procédé selon la revendication 10, **caractérisé en ce que** la position neutre de la lame d'ébavurage (9) n'est plus la position pivotée à 90 degrés hors du corps de base (12) de l'outil d'ébavurage, mais que la lame d'ébavurage (9) avec son axe de lame (55) adopte une position de pivotement coudée par rapport à la position neutre (51) et qu'à la lame d'ébavurage est associé un dispositif antiretour qui empêche un retour par pivotement dans la position à 90 degrés (51).
